# EUROPÄISCHE PATENTSCHRIFT

(11) **EP 2 445 991 B1**
(45) Veröffentlichungstag und Bekanntmachung des Hinweises auf die Patenterteilung: **04.03.2026**
(21) Anmeldenummer: 10740138.2
(22) Anmeldetag: 22.06.2010
(51) Int. Cl.: C10G 49/00, C10G 1/00

(54) **VERFAHREN ZUR BIORAFFINERIE**
BIOREFINERY PROCESS
PROCÉDÉ DE BIORAFFINERIE

(30) Priorität: 26.06.2009 DE 102009030843
(43) Veröffentlichungstag der Anmeldung: 02.05.2012
(73) Patentinhaber: Nexxoil GmbH, 13507 Berlin (DE)
(72) Erfinder: WILLNER, Thomas, 21077 Hamburg (DE)
(74) Vertreter: Gulde & Partner
(86) Internationale Anmeldenummer: PCT/DE2010/000705
(87) Internationale Veröffentlichungsnummer: WO 2010/149137

(56) Entgegenhaltungen:
- WO-A1-2009/018531
- WO-A2-2007/047063
- WO-A2-2009/029660
- JP-A- 2006 063 310
- US-A1- 2008 053 870
- US-A1- 2008 072 478
- US-A1- 2009 084 666
- FRANK BEHRENDT: "Direktverfluessigung von Biomasse - Reaktionsmechanismen und Produktverteilungen ionsmechanismen und Produktverteilungen", INTERNET CITATION, 8 June 2006 (2006-06-08), XP007902530, Retrieved from the Internet <URL:http://www.naturdaemmstoffe.info/pdf/literatur/pdf_253studie_zur_direktverfluessigung_final_komprimiert.pdf> [retrieved on 20070618]
- FATIH DEMIRBAS ET AL: "Biorefineries for biofuel upgrading: A critical review", APPLIED ENERGY, ELSEVIER SCIENCE PUBLISHERS, GB, vol. 86, 27 May 2009 (2009-05-27), pages S151 - S161, XP026587500, ISSN: 0306-2619, [retrieved on 20090527], DOI: 10.1016/J.APENERGY.2009.04.043

## Beschreibung

Die Erfindung betrifft ein Verfahren zur Herstellung eines petrochemischen Produkts aus Biomasse, mit den Schritten Entwässern und Trocknen von Biomasse, Erzeugen von Rohöl mittels Direktverflüssigung der getrockneten Biomasse, Hydrieren des Rohöls zu Kohlenwasserstoffen und Raffinieren der Kohlenwasserstoffe zum petrochemischen Produkt.

Der Begriff Biomasse bezeichnet die Gesamtheit der Masse an organischen Materialien einschließlich deren, die in biogenen Reststoffen und Klärschlammen enthalten sind.

Pflanzliche Biomasse besteht im Wesentlichen aus den drei Biopolymeren Cellulose, Hemicellulosen (auch als Polyosen bezeichnet) und Lignin. Ihr Anteil macht bei Hölzern der gemäßigten Zonen in der Regel 97-99% der Holzsubstanz aus. Davon entfallen 30-35% auf Cellulose, 15-35% auf Hemicellulosen und 20-35% auf Lignin. Wesentlich geringere Anteile weisen Extraktstoffe mit 1-3% sowie anorganische Bestandteile (Asche) 0, 1-0,5% auf. Im Allgemeinen ist der Ligninanteil in Nadelhölzern höher als in Laubhölzern, in Laubhölzern ist der Hemicellulosen-Anteil etwas höher.

Die Erzeugung von flüssigen Kohlenwasserstoffen als Grundlage für petrochemische Produkte wie zum Beispiel technisch nutzbare (d. h. normgerechte) Heizöle und Kraftstoffe kann auf verschiedenen Pfaden erfolgen, z. B. durch vollständige Zerlegung des Moleküls in die Elemente bzw. kleine Moleküle mittels Vergasung bei sehr hohen Temperaturen und anschließende Totalsynthese neuer Verbindungen (dieser Ansatz wird z. B. bei der Fischer-Tropsch-Synthese verfolgt) oder durch Direktverflüssigung bei mäßigen Temperaturen unter reduzierenden (d. h. hydrierenden) und/oder katalytischen Bedingungen.

Will man auf die energieaufwändige Vergasung und Totalsynthese neuer Verbindungen verzichten, so muss auf die Direktverflüssigung unter reduzierenden Bedingungen zurückgegriffen werden. Eine sehr umfassende Beschreibung aller existierenden Verfahren zur Direktverflüssigung findet sich in der Studie Direktverflüssigung von Biomasse - Reaktionsmechanismen und Produktverteilungen 114-50-10-0337/05-B von Prof. Dr. Frank Behrendt (im Internet veröffentlicht unter http://www.fnr-server.de/ftp/pdf/literatur/pdf 253studie zur direktverfluessigung final komprimiert.pdf.).

Die Herausforderung, der sich jegliches Verfahren zur Direktverflüssigung von Biomasse stellen muss, kann nach Behrendt durch die folgende Bruttoreaktionsgleichung beschrieben werden:

CH_{1,4}O_{0,7} → CH₂.

Zum einen muss also Sauerstoff entfernt zum anderen muss externer Wasserstoff zugeführt werden.

Die Studie zeigt die Notwendigkeit des Einsatzes von Wasserstoff. Wird kein Wasserstoff eingesetzt, so weisen die Zwischen- und Endprodukte hohe Anteile an ringförmigen Komponenten auf. Um von dort auf geradkettige Kohlenwasserstoffe zu kommen, müssen noch weitere Schritte unternommen werden. Die dargestellten Reaktionspfade ohne Einsatz von Wasserstoff zeigen deutlich, dass die Produktpalette einen nicht unerheblichen Anteil an Sauerstoff-Atomen beinhaltet. Der Sauerstoff-Anteil in den verschiedenen Komponenten ist im Vergleich zu Erdöl deutlich erhöht (10-50%), was u. a. einen niedrigeren Heizwert des Produktöls zur Folge hat. Darüber hinaus bedeutet dieser erhöhte Anteil an Sauerstoff, dass das entstandene Öl sehr reaktiv ist und zur Zersetzung bzw. unerwünschten Folgereaktionen neigt. Eine Weiterbearbeitung (so genanntes Upgrading) ist somit unverzichtbar. Wird Wasserstoff bei der Verflüssigung eingesetzt, um reaktive Zwischenprodukte (z. B. Radikale) abzusättigen und um sauerstoffhaltige funktionelle Gruppen zu beseitigen, und wird darüber hinaus eine größere Zahl weiterer Verfahrens- und Aufbereitungsschritte durchgeführt, so gelingt es, zielgerichtet Kohlenwasserstoffe bestimmter Größenverteilungen zu produzieren. Dieses ist eine wichtige Voraussetzung zur Herstellung normgerechter flüssiger Kraftstoffe und Heizöle.

Bei dem historischen Pittsburg Energie Resarch Center (PERC)-Verfahren, welches unter sehr hohem Druck mit wässrigem Medium, gelöstem Katalysator, Kreislauföl und Kohlenmonoxid-Wasserstoffgasgemisch arbeitet, stellte sich heraus, dass das Kreislauföl über zu viele aromatische und sauerstoffhaltige Komponenten verfügt, so dass der Wasserstoffbedarf für die Kraftstofferzeugung nicht aus dem Kreislauföl gedeckt werden kann.

Das ebenso historische Lawrence Berkeley Laboratory (LBL)-Verfahren, welches ohne Kreislauföl, aber ansonsten unter den gleichen aufwendigen Bedingungen wie das PERC-Verfahren durchgeführt wird, erzeugt ebenfalls keine Kohlenwasserstoffe. Beide Verfahren führen nicht zu normgerechten Kraftstoffen und wurden wegen der enormen Komplexität aus technischen und ökonomischen Gründen nicht weiter verfolgt.

Hingegen können mit dem hydrolytischen HTU-Verfahren (Hydrothermal Upgrading) viele verschiedene Biomassen (auch mit hohem Feuchtegehalt) unter sehr hohem Druck verflüssigt werden. Die entstehenden teerartigen sauerstoffhaltigen Produkte müssen noch mit Hilfe der HDO (Hydro-Deoxygenation) unter Zusatz von Wasserstoff in Kohlenwasserstoff-Ölfraktionen umgewandelt werden.

Unter Wasserstoffdruck und unter Einsatz teurer Edelmetall-Katalysatoren läuft die Direkte Katalytische Druckverflüssigung nach dem BFH-Verfahren. Auch beim BFH-Verfahren sind die gewonnenen Rohöle nicht sauerstofffrei und bedürfen weiterer Hydrierung mit Wasserstoff und einer Reihe von Aufarbeitungsschritten zur Umwandlung in Kohlenwasserstoff-Ölfraktionen.

Das Druckhydrierungs-Verfahren / DoS (Direktverflüssigung organischer Substanzen) nach Willner wird ebenfalls unter Wasserstoffdruck aber ohne Katalysatoren durchgeführt. Auch beim DoS-Verfahren sind die gewonnenen Rohöle sauerstoffhaltig und bedürfen weiterer Hydrierung mit Wasserstoff und einer Reihe von Aufarbeitungsschritten zur Umwandlung in Kohlenwasserstoff-Ölfraktionen.

Alle bisher genannten Direktverflüssigungsverfahren einschließlich der historischen Verfahren arbeiten unter Druck und sind somit sehr aufwendig. Dabei stellt insbesondere der Eintrag fester Biomasse in den Druckreaktor im Hinblick auf Konsistenz der in den Reaktor gelangenden Biomasse sowie im Hinblick auf Durchführbarkeit, Zuverlässigkeit und Wirtschaftlichkeit des Prozesses stets ein Problem dar. Außerdem sind Druckanlagen insgesamt teurer und im Betrieb anfälliger als Atmosphärendruck-Anlagen.

Daneben gibt es folgende Direktverflüssigungsverfahren, die unter Atmosphärendruck arbeiten:
Das KDV-Verfahren (Katalytische Drucklose Verölung) der Firma Alphakat sowie die Variante nach Willner werden in einer Schwerölphase als Reaktionsmedium unter Atmosphärendruck durchgeführt und benötigen pulverisierte Feststoff-Katalysatoren. Letzteres ist ein wirtschaftliches Problem, da die Katalysatoren teuer sind und im Reaktor ihre Aktivität sehr schnell durch Verkokung verlieren. Außerdem muss dem KDV-Verfahren ständig sauerstofffreies Schweröl zugeführt werden, da sich beim Einsatz von Biomasse die Reaktorsumpfölphase nicht selbsttätig regeneriert.

Die Flashpyrolyse ist im Wesentlichen eine sehr schnelle Aufheizung auf Reaktionstemperatur unter Atmosphärendruck. Hierbei entsteht eine hohe Ausbeute an Rohöl, welches allerdings einen extrem niedrigen Heizwert in der Größenordnung von nur 15 bis 17 MJ/kg gemäß einem sehr hohen Sauerstoffgehalt von über 50 Gew.-% hat. Daher ist der Wasserstoffbedarf für eine hydrierende Aufarbeitung des Flashpyrolyseöles zu Kohlenwasserstoffen derart hoch, dass der Gesamtprozess unwirtschaftlich wird.

Das NTK-Verfahren (Niedertemperaturkonvertierung) von Prof. Bayer (Uni Tübingen) ist ein einfaches Pyrolyseverfahren unter Atmosphärendruck ohne schnelle Aufheizung. Dieses Verfahren ist allerdings nicht für die Verflüssigung pflanzlicher Biomasse geeignet, sondern wird überwiegend zur Klärschlammverflüssigung eingesetzt.

In der US 2008/0072478 A1 wird ein Verfahren zur Herstellung von Ölen aus Biomasse beschrieben, bei dem die eingeführte Biomasse unter Ausschluss von Sauerstoff verflüssigt wird und die verflüssigte Biomasse rückgeführt und mit weiterer Biomasse gemischt wird.

Aufgabe der Erfindung ist es daher, ein energetisch günstiges Verfahren zu schaffen, mit dem jede Art von Biomasse rückstands- und abwasserfrei in hochwertige petrochemische Kohlenwasserstoffprodukte verarbeiten werden kann. Das Verfahrei wird unter Atmosphärendruck und ohne Zusatz von Katalysatoren durchgeführt.

Diese Aufgabe wird durch das Verfahren mit den in Anspruch 1 genannten Schritten gelöst. Die Unteransprüche geben vorteilhafte Ausgestaltungen der Erfindung wieder.

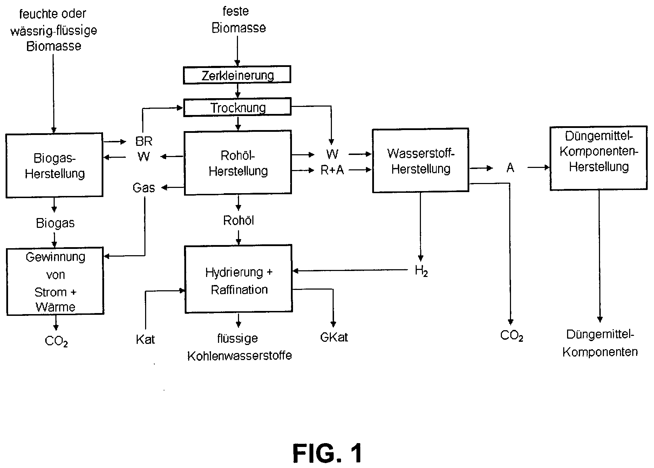

Die Erfindung wird anhand eines in der einzigen Fig. 1 dargestellten besonders bevorzugt ausgebildeten Verfahrensablaufs näher erläutert.

In Fig. 1 ist ein Blockfließbild des erfindungsgemäßen Verfahrens zu sehen.

Durch Kombination und Vernetzung eines geeigneten Direktverflüssigungsverfahrens zur Rohölgewinnung mit Biogasproduktion, Blockheizkraftwerk, interner Wasserstoffproduktion, Rohölhydrierung und -raffination zu petrochemischen Kohlenwasserstoffprodukten sowie Mineralstoffaufarbeitung zu Düngemittelkomponenten gelingt es erstmalig ohne Anwendung von Druck und Katalysatoren im Verflüssigungsschritt, ohne Erzeugung von Rückständen und Abwasser sowie ohne Zusatz externen Wasserstoffs, petrochemische Kohlenwasserstoffprodukte und Düngemittel aus Biomasse zu erzeugen.

Der Begriff Biomasse bezeichnet dabei die Gesamtheit der Masse an organischen Materialien einschließlich deren, die in biogenen Reststoffen und Klärschlämmen enthalten sind.

Die petrochemischen Produkte können dabei zum Beispiel hochwertige Chemikalien, Kraftstoffe und Heizöle umfassen.

Das erfindungsgemäße Bioraffineriekonzept kombiniert ein spezielles Direktverflüssigungsverfahren, welches trockene Biomasse und Reststoffe in einer Schwerölphase, der so genannten Sumpfphase, zu Rohölen verarbeitet mit folgenden Prozesseinheiten:
1. Biogasproduktion aus wasserhaltigen Substraten und einem Teil des Abwassers aus der Direktverflüssigung;
2. Blockheizkraftwerk, in dem das Biogas sowie das Nebenproduktgas aus der Direktverflüssigung zu Strom und Wärme zur Deckung des Energiebedarfs aller Bioraffinerieprozesse verarbeitet wird;
3. Interne Wasserstoffproduktion aus den Nebenprodukten Abwasser und festem Rückstand aus der Direktverflüssigung zur Deckung des gesamten Wasserstoffbedarfs für die Hydrierung des Rohöles;
4. Hydrierung des Rohöles zu Kohlenwasserstoffen mit integrierter Regeneration von Katalysatoren, die dabei benötigt werden;
5. Raffination der Kohlenwasserstoffe zu petrochemischen Produkten wie Chemikalien, Kraftstoffen und Heizölen; und
6. Aufarbeitung der verbleibenden Mineralstoffe aus den Edukten zu Düngemittelkomponenten.

Die besonderen Merkmale der im erfindungsgemäßen Verfahren eingesetzten Direktverflüssigungs-Verfahrensstufe sind:
- die Verwendung der Schwerölsumpfphase als Reaktionsmedium, wobei sich die Schwerölsumpfphase selbsttätig im kontinuierlichen Betrieb regeneriert;
- ein Ölkreislauf ist nicht notwendig;
- Verfahrensprinzip der Reaktivdestillation (Reaktor ist gleichzeitig erste Destillationsstufe, d. h. die Reaktionsprodukte werden destillativ aus dem Reaktor entfernt;
- das Verfahren läuft unter Atmosphärendruck; und
- es sind keine Katalysatoren notwendig.

Weiterhin fallen die Nebenprodukte fester Rückstand und Abwasser bei Einsatz des erfindungsgemäßen Direktverflüssigungsverfahrens in der Schwerölsumpfphase überraschenderweise nach Menge und Verhältnis so günstig an, dass daraus in Anbetracht des im Vergleich zur Flashpyrolyse unerwartet niedrigen Sauerstoffgehaltes im Rohöl der gesamte Wasserstoffbedarf für die Rohölhydrierung gedeckt werden kann.

Es ist ebenfalls nicht zu erwarten gewesen, dass sich die wässrige Produktphase aus der Rohöl-Herstellung trotz ihres hohen Gehaltes an organischen Säuren, wie z. B. Ameisensäure und Essigsäure, sowie an toxischen Aldehyden, Furan- und Phenolderivaten in einer Biogasanlage zur Produktion von Biogas verarbeiten lässt.

Besondere Vorteile der Erfindung gegenüber dem Stand der Technik sind die hohe Effizienz verbunden mit der Möglichkeit dezentralen wirtschaftlichen Betriebes, die vollkommene Rohstoffflexibilität, die Vermeidung von Fremdstoffen wie Katalysatoren im Verflüssigungsschritt, die Vermeidung von externem Wasserstoff und Fremdenergie, die Gewährleistung von Rückstands- und Abwasserfreiheit, die Erzeugung petrochemischer Produkte sowie die steuerbare Begrenzung und Anpassung der Produkte an die Marktsituation. Schließlich werden weitgehend geschlossene Stoffkreisläufe auch im Hinblick auf Mineralstoffe bzw. Düngemittel ermöglicht.

Eine besonders vorteilhafte Ausführung der Erfindung liegt darin, zur Direktverflüssigung ein Verfahren zur Herstellung von Rohöl aus Biomasse unter Atmosphärendruck zu nutzen, welches aus den folgenden Schritten besteht:
- Zuführen von getrockneter Biomasse in einen Schweröl enthaltenden Reaktor zum Ausbilden einer aus Biomasse und Schweröl bestehenden Sumpfölphase;
- Temperieren der Sumpfölphase auf eine vorbestimmte Reaktionstemperatur;
- Kondensieren und Auffangen der flüchtigen Reaktionsprodukte; und
- Abscheiden und Auffangen des Rohöls, wobei die Schwerölphase wenigstens 5 Gew.-% organisch gebundenen Sauerstoff aufweist.

Die Erfindung wird im Folgenden am Beispiel der Verarbeitung von Holz als Biomasse dargelegt.

In diesem Fall fallen rund 35-40 Gew.-% Rohöl bzgl. eingesetzter Biomassetrockensubstanz mit einem Sauerstoffgehalt von nur etwa 20-25% an. Der Wasserstoffbedarf für die Hydrierung des Rohöles zu flüssigen Kohlenwasserstoffen liegt somit bei nur etwa 2,5-3,0% bzgl. eingesetzter Biomassetrockensubstanz. Dieser Wasserstoffbedarf lässt sich aus den Nebenprodukten fester Rückstand (etwa 10-20 Gew.-% bzgl. eingesetzter Biomassetrockensubstanz) und Abwasser (etwa 25-30 Gew.-% bzgl. eingesetzter Biomassetrockensubstanz) vollständig über eine Wasserdampfvergasung und Kohlenmonoxidkonvertierung decken. Hierbei kann der Energiebedarf der Vergasung in günstigen Fällen sogar durch einen teilweise autothermen Betrieb durch Sauerstoffeinsatz reduziert werden, so dass der energetische Aufwand der Wasserstoffgewinnung auf nur etwa 5-10% der ursprünglichen Biomasse-Energie gesenkt werden kann. Das anfallende Überschusswasser wird der Biogaserzeugung zugeführt und trägt damit zur Prozessenergieerzeugung bei.

### Bezugsliste zu Fig. 1

BR = Rückstand aus der Biogasherstellung
W = wässrige Produktphase aus der Rohölherstellung
R = organischer Rückstand aus der Rohölherstellung
A = anorganischer Rückstand aus der Rohöl- und Wasserstoffherstellung
H₂= Wasserstoff
Kat = Katalysator
GKat = gebrauchter Katalysator
C0₂= Kohlendioxid

## Patentansprüche

1. Verfahren zur Herstellung eines petrochemischen Produkts aus Biomasse, mit den Schritten:
a) Entwässern und Trocknen von Biomasse;
b) Erzeugen von Rohöl mittels Direktverflüssigung der getrockneten Biomasse;
c) Hydrieren des Rohöls zu Kohlenwasserstoffen; und
d) Raffinieren der Kohlenwasserstoffe zum petrochemischen Produkt,
**dadurch gekennzeichnet, dass** die Direktverflüssigung in einer Schwerölsumpfphase durchgeführt wird und der für das Hydrieren des Rohöls verwendete Wasserstoff aus dem beim Entwässern und Trocknen der Biomasse und/oder bei der Direktverflüssigung anfallenden Abwasser und dem bei der Direktverflüssigung anfallenden Rückstand gewonnen wird, und die Direktverflüssigung als Reaktivdestillation unter Atmosphärendruck und ohne Katalysatoren durchgeführt wird.

2. Verfahren nach Anspruch 1, **dadurch gekennzeichnet, dass** der Wasserstoff durch Wasserdampfvergasung und Kohlenmonoxidkonvertierung von Abwasser und Rückstand hergestellt wird.

3. Verfahren nach einem der vorhergehenden Ansprüche, **dadurch gekennzeichnet, dass** die Direktverflüssigung in einer sich regenerierenden Schwerölsumpfphase durchgeführt wird.

4. Verfahren nach einem der vorhergehenden Ansprüche, **dadurch gekennzeichnet, dass** der Rückstand der bei der Direktverflüssigung entstehenden Schwerölsumpfphase entnommen wird.

5. Verfahren nach einem der vorhergehenden Ansprüche, **dadurch gekennzeichnet, dass** die Biomasse pflanzlichen oder tierischen Ursprungs ist.

6. Verfahren nach einem der vorhergehenden Ansprüche, **dadurch gekennzeichnet, dass** das das petrochemische Produkt ein Kraftstoff oder ein Heizöl ist.

## Claims

1. Method for producing a petrochemical product from biomass, involving the following steps:
a) dewatering and drying biomass;
b) producing crude oil by direct liquefaction of the dried biomass;
c) hydrogenating the crude oil into hydrocarbons; and
d) refining the hydrocarbons into a petrochemical product,
**characterized in that** the direct liquefaction is carried out in a heavy oil sump phase and the hydrogen used for hydrogenating the crude oil is extracted from wastewater accumulated during dewatering and drying of the biomass and/or from the residue accumulated during direct liquefaction, and the direct liquefaction is carried out as reactive distillation under atmospheric pressure and without catalysts.

2. Method according to claim 1, **characterized in that** the hydrogen is produced by water vapor gasification and carbon monoxide conversion of wastewater and residue.

3. Method according to any one of the preceding claims, **characterized in that** the direct liquefaction is carried out in a regenerating heavy oil sump phase.

4. Method according to any one of the preceding claims, **characterized in that** the residue is extracted from the heavy oil sump phase generated during direct liquefaction.

5. Method according to any one of the preceding claims, **characterized in that** the biomass has plant or animal origin.

6. Method according to any one of the preceding claims, **characterized in that** the petrochemical product is a fuel or a fuel oil.

## Revendications

1. Procédé de production d'un produit pétrochimique à partir de biomasse, comprenant les étapes suivantes :
a) déshydratation et séchage de biomasse ;
b) production de pétrole brut par liquéfaction directe de la biomasse séchée ;
c) hydrogénisation du pétrole brut en hydrocarbures ; et
d) raffinement des hydrocarbures en un produit pétrochimique,
**caractérisé en ce que** la liquéfaction directe est réalisée dans une phase de puisard d'huile lourde et l'hydrogène utilisé pour hydrogéner le pétrole brut est extrait des eaux usées accumulées lors de la déshydratation et du séchage de la biomasse et/ou du résidu accumulé lors de la liquéfaction directe, et la liquéfaction directe est réalisée sous forme de distillation réactive sous pression atmosphérique et sans catalyseurs.

2. Procédé selon la revendication 1, **caractérisé en ce que** l'hydrogène est produit par gazéification de vapeur d'eau et conversion du monoxyde de carbone des eaux usées et du résidu.

3. Procédé selon l'une quelconque des revendications précédentes, **caractérisé en ce que** la liquéfaction directe est réalisée dans une phase de puisard d'huile lourde régénérante.

4. Procédé selon l'une quelconque des revendications précédentes, **caractérisé en ce que** le résidu est extrait de la phase de puisard d'huile lourde générée lors de la liquéfaction directe.

5. Procédé selon l'une quelconque des revendications précédentes, **caractérisé en ce que** la biomasse est d'origine végétale ou animale.

6. Procédé selon l'une quelconque des revendications précédentes, **caractérisé en ce que** le produit pétrochimique est un carburant ou un mazout.
